# EUROPÄISCHE PATENTSCHRIFT

(11) **EP 0 924 340 B1**
(45) Veröffentlichungstag und Bekanntmachung des Hinweises auf die Patenterteilung: **03.03.2004**
(21) Anmeldenummer: 98123325.7
(22) Anmeldetag: 08.12.1998
(51) Int. Cl.: D21G 1/02

(54) **Elastischer Belag für eine Kalanderwalze, damit versehene Kalanderwalze und deren Anwendung**
Resilient cover for a calenderroll, calenderroll having such a cover and its application
Revêtement élastique pour un rouleau de calandre, rouleau de calandre pourvu de ce revêtement et son application

(30) Priorität: 22.12.1997 DE 19757185
(43) Veröffentlichungstag der Anmeldung: 23.06.1999
(73) Patentinhaber: Voith Paper Patent GmbH, 89522 Heidenheim (DE)
(72) Erfinder: Kayser, Franz, 47608 Geldern (DE)
(74) Vertreter: Knoblauch, Andreas, Dr.-Ing.

(56) Entgegenhaltungen:
- DE-A- 19 506 301

## Beschreibung

Die Erfindung bezieht sich auf einen elastischen Belag für Kalanderwalzen, auf eine mit diesem Belag versehene Kalanderwalze und auf eine Anwendung dieser Kalanderwalze, wie beispielsweise aus DE-A-19 506 301 bekannt.

Bei der Papierveredelung ist es bekannt, Kalanderwalzen mit einem elastischen Belag zu versehen. Dieser besteht zumeist aus zusammengepreßten Faserstoffronden und in neuerer Zeit auch aus einem Kunststoff. Die Elastizität des Belages führt zu einer Vergleichmäßigung der Verdichtung des zu veredelnden Papiers, wodurch die sogenannte Schwarzsatinage vermieden werden soll.

Die elastischen Beläge sind häufig höheren Temperaturen ausgesetzt, zum Teil weil den Kalanderwalzen Wärme als zusätzliche Verformungsenergie zugeführt wird und zum Teil weil durch die periodische Kompression und Entlastung im Belag selbst Wärme erzeugt wird. Wenn die maximal zulässige Temperatur, sei es auch nur örtlich, für eine gewisse Zeit überschritten wird, wird der elastische Belag zerstört und die Kalanderwalze unbrauchbar. Eine solche Überhitzung ergibt sich beispielsweise, wenn die Druckspannung im Walzenspalt zu groß eingestellt ist oder ein Fremdkörper, wie ein Papierstreifen, an der Gegenwalze anhaftet.

Der Erfindung liegt die Aufgabe zugrunde, die mit der Temperaturabhängigkeit des Belages zusammenhängenden Probleme besser beherrschen zu können.

Diese Aufgabe wird gemäß dem kennzeichnenden Teil des Anspruchs 1 dadurch gelöst, daß der Belag mit einem Farbmaterial versehen ist, das in Abhängigkeit von der Temperatur seine Farbe ändert.

Die Farbänderung dieses Materials zeigt verzögerungsfrei an, daß eine bestimmte Temperatur überschritten worden ist. Hieraus kann die Bedienungsperson entsprechende Rückschlüsse ziehen und rechtzeitig Gegenmaßnahmen treffen. Auch kann ein die Farbe überwachendes Steuerungssystem automatisch eingreifen.

Hierfür empfiehlt es sich, daß das Farbmaterial seine Farbe reversibel ändert.

Vorteile bieten sich anderseits auch, wenn das Farbmaterial seine Farbe irreversibel ändert. Die Farbänderung stellt dann einen Beweis dafür dar, daß und wo eine Überhitzung stattgefunden hat. Dies ist für die nachträgliche Ermittlung von Fehlerursachen von Interesse. Das Farbmaterial muß seine Farbe nicht kontinuierlich mit der Temperatur ändern. Im allgemeinen genügt es, daß das Farbmaterial nur einen einer vorgegebenen Temperatur zugeordneten Farbumschlag zeigt.

Es kann aber auch zweckmäßig sein, daß das Farbmaterial mehrere jeweils einer vorgegebenen Temperatur zugeordnete Farbumschläge zeigt. Auf diese Weise kann beispielsweise eine kritische Temperatur und vorher bereits die Annäherung an diese kritische Temperatur angezeigt werden.

Bei einer Ausführungsform erfolgt der Farbumschlag bei einer Temperatur, die über der maximal zulässigen Belagstemperatur liegt. Hierdurch wird angezeigt, daß die Temperatur bereits zu hoch war.

Vorteile bietet es auch, daß der Farbumschlag bei einer Temperatur erfolgt, die gleich der maximal zulässigen Belagstemperatur oder etwas kleiner ist. Mit dieser Maßnahme ist es möglich, den Kalander so zu steuern, daß Temperaturschäden vermieden werden.

Das Farbmaterial weist insbesondere Farbpigmente und/oder Farbkristalle auf. Es ist so zu wählen, daß der Farbumschlag bei der gewünschten kritischen Temperatur erfolgt und mit dem übrigen Belagmaterial verträglich ist.

Vor allem kann das Farbmaterial Kupfer-, Nickel-, Kobalt-, Chrom-, Vanadium-, Molybdän- oder Uran-Salze aufweisen.

Günstig ist es, daß der Belag im wesentlichen aus Kunststoff besteht. Zum einen verträgt Kunststoff wesentlich höhere Temperaturen als Faserstoffe. Zum andern ist er aber infolge der Walkarbeit besonders durch örtliche Erhitzung gefährdet.

Mit Vorzug ist das Farbmaterial dem Kunststoff beigemischt.

Eine Alternative besteht darin, daß das Farbmaterial auf die Oberfläche des Belags aufgestrichen ist.

Empfehlenswert ist es ferner, daß der Belag durch eine elastische Farbschicht gebildet ist. Es genügen verhältnismäßig dünne Beläge mit einer Dicke von 2 mm oder weniger.

Der Schutz soll sich auch auf eine Kalanderwalze erstrecken, die mit dem vorstehend beschreiben elastischen Belag versehen ist.

Außerdem wird Schutz für die Anwendung der Kalanderwalze bei einem Kalander mit zonengesteuerter Biegeeinstellwalze beansprucht, deren Steuerung in Abhängigkeit vom Farbmuster der Belagoberfläche erfolgt. Wenn die Kräfte so eingestellt sind, daß sich ein gleichmäßiges Farbmuster ergibt, ist für den Fachmann erkennbar, daß die Kräfte- bzw. Druckspannungsverteilung im Walzenspalt gleichmäßig ist.

Die Erfindung wird nachstehend anhand in der Zeichnung dargestellter bevorzugter Ausführungsbeispiele näher erläutert. Es zeigen:
- Fig. 1: schematisch einen Kompaktkalander,
- Fig. 2: einen Schnitt durch einen elastischen Belag und
- Fig. 3: einen Schnitt durch eine abgewandelte Ausführungsform des Belages.

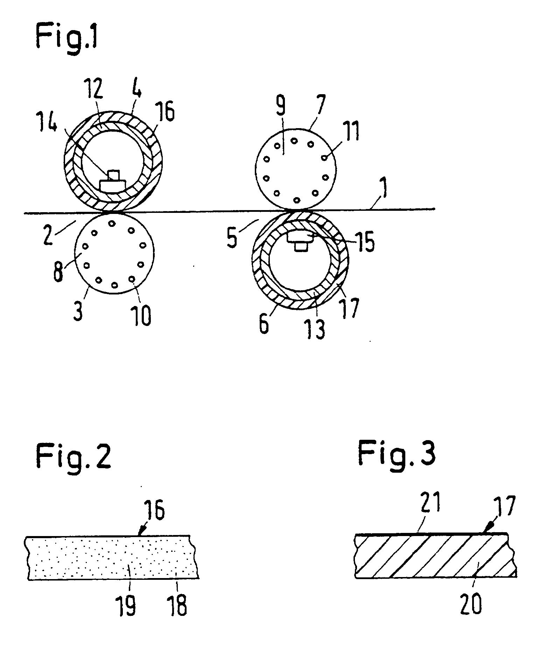

Bei dem Kalander nach Fig. 1 wird eine Papierbahn 1 durch einen ersten Walzenspalt 2, der durch die Walzen 3 und 4 begrenzt ist, und einen zweiten Walzenspalt 5, der durch die Walzen 6 und 7 begrenzt ist, hindurchgeführt. Die Walzen 3 und 7 sind beheizbar und weisen in einem Walzenkörper 8, 9 axiale Heizmittelkanäle 10, 11 auf. Die Walzenkörper bestehen aus Hartguß und haben eine harte glatte Oberfläche. Die Walzen 4 und 6 sind Biegeeinstellwalzen und weisen einen Mantel 12, 13 auf, der durch hydrostatische Stützelemente 14, 15 gegen die andere Walze 3, 7 preßbar ist. Die Stützelemente 14, 15 sind zonenweise ansteuerbar. Die Walzenmäntel 12, 13 tragen einen Belag 16, 17 aus einem elastischen Kunststoff, der die Verdichtung des Papiers vergleichmäßigt und dadurch die Schwarzsatinage verhindert. Die maximal zulässigen Temperaturen solcher Beläge liegen in der Praxis zwischen 100 und 150°C.

Der in Fig. 2 näher veranschaulichte Belag 16 weist inmitten der Kunststoffschicht 18 ein Farbmaterial 19, das in Abhängigkeit von der Temperatur seine Farbe ändert, auf, beispielsweise in der Form von Farbpigmenten oder Farbkristallen. Die Kunststoffschicht 18 kann durch Fasern verstärkt sein, was aber nicht veranschaulicht ist.

Bei der Ausführungsform in Fig. 3 besteht der Belag 17 wiederum aus einer Kunststoffschicht 20. Hier ist das Farbmaterial 21, das mit der Temperatur seine Farbe ändert, auf die Oberfläche des Belags 17 aufgestrichen, beispielsweise in der Form eines Farb- oder Lackanstrichs.

Materialien mit Farbumschlag bei den unterschiedlichsten Temperaturen sind in großer Zahl bekannt. Beispielsweise handelt es sich um Ortho-Salze, die sich bei Erhitzung in Pyro-Salze verwandeln. Auf die weiter vorn genannten Kupfer-, Nickel-, Kobalt-, Chrom-, Vanadium-, Molybdän- oder Uran-Salze sei verwiesen.

Als Kunststoff sind die verschiedensten Materialien geeignet. Hierzu gehört insbesondere Epoxid-, Polyesterund Phenol-Harz, die mit Kohlenstoff-, Aramid- und Polyethylen-Fasern kombiniert werden können. Hierzu wird beispielsweise auf "Römpp Chemie-Lexikon" 1992, 9. Auflage, Band 6, Seite 4491 verwiesen.

In Abhängigkeit vom Belag und der Spaltbelastung ist das Farbmaterial so zu wählen, daß es bei der gewünschten Temperatur die Farbe ändert, die im Walzenspalt auftretenden Belastungen erträgt und mit dem elastischen Grundmaterial verträglich ist.

Der Farbumschlag bei Erreichen einer vorgegebenen Temperatur kann auf verschiedene Weise ausgenutzt werden, insbesondere in den nachstehenden Fällen:
1. Das Material dient dem Überlastungsschutz. Befindet sich auf der Gegenwalze ein Fremdkörper, beispielsweise ein Papierstreifen, so tritt lokal eine starke Belastung auf, die nach einiger Zeit zu einer Zerstörung des Belages führt. Der bei Überschreiten der kritischen Temperatur auftretende Farbumschlag zeigt lange bevor die Zerstörung eintritt diesen Fehler an. Die Bedienungsperson kann daher durch einen Notstopp oder durch Entfernen des Fremdkörpers einen großen Schaden vermeiden.
2. Das Farbmaterial dient Steuerungszwecken. Wenn die Kräfteverteilung im Walzenspalt gleichmäßig ist, ergibt sich über die gesamte Länge der Walze auch eine gleichmäßige Farbe. Ändert sich diese Farbe, so sind entweder automatisch oder durch eine Bedienungsperson die Belastungen im Kalander, insbesondere durch die zonengesteuerten Stützelemente 14, 15 so zu ändern, daß sich wieder ein gleichmäßiges Farbmuster ergibt.
3. Das Farbmaterial dient als Fehlernachweis. Wenn nämlich ein Farbmaterial mit irreversiblem Farbumschlag verwendet wird, bleibt die Fehlerstelle auf Dauer gekennzeichnet, so daß man der Fehlerursache recht genau nachgehen kann.

Von den dargestellten Ausführungsform kann in vielfacher Hinsicht abgewichen werden, ohne den Grundgedanken der Erfindung zu verlassen. Beispielsweise ist es möglich, das Farbmaterial 21 in Form einer Farbschicht direkt auf den Walzenmantel aufzutragen, wenn diese Farbschicht eine gewisse Eigenelastizität besitzt.

## Patentansprüche

1. Elastischer Belag für Kalanderwalzen, **dadurch gekennzeichnet, daß** er mit einem Farbmaterial (19; 21) versehen ist, das in Abhängigkeit von der Temperatur seine Farbe ändert.

2. Belag nach Anspruch 1, **dadurch gekennzeichnet, daß** das Farbmaterial (19; 21) seine Farbe reversibel ändert.

3. Belag nach Anspruch 1, **dadurch gekennzeichnet, daß** das Farbmaterial (19; 21) seine Farbe irreversibel ändert.

4. Belag nach einem der Ansprüche 1 bis 3, **dadurch gekennzeichnet, daß** das Farbmaterial (19; 21) nur einen einer vorgegebenen Temperatur zugeordneten Farbumschlag zeigt.

5. Belag nach einem der Ansprüche 1 bis 3, **dadurch gekennzeichnet, daß** das Farbmaterial (19; 21) mehrere jeweils einer vorgegebenen Temperatur zugeordnete Farbumschläge zeigt.

6. Belag nach einem der Ansprüche 1 bis 5, **dadurch gekennzeichnet, daß** ein Farbumschlag bei einer Temperatur erfolgt, die über der maximal zulässigen Belagstemperatur liegt.

7. Belag nach einem der Ansprüche 1 bis 5, **dadurch gekennzeichnet, daß** ein Farbumschlag bei einer Temperatur erfolgt, die gleich der maximal zulässigen Belagstemperatur oder etwas kleiner ist.

8. Belag nach einem der Ansprüche 1 bis 7, **dadurch gekennzeichnet, daß** das Farbmaterial (19; 21) Farbpigmente aufweist.

9. Belag nach einem der Ansprüche 1 bis 7, **dadurch gekennzeichnet, daß** das Farbmaterial (19; 21) Farbkristalle aufweist.

10. Belag nach einem der Ansprüche 1 bis 7, **dadurch gekennzeichnet, daß** das Farbmaterial (19; 21) Kupfer-, Nickel-, Kobalt-, Chrom-, Vanadium-, Molybdän- oder Uran-Salze aufweist.

11. Belag nach einem der Ansprüche 1 bis 10, daß der Belag im wesentlichen aus Kunststoff besteht.

12. Belag nach Anspruch 11, **dadurch gekennzeichnet, daß** das Farbmaterial (19) dem Kunststoff beigemischt ist.

13. Belag nach einem der Ansprüche 1 bis 11, **dadurch gekennzeichnet, daß** das Farbmaterial (21) auf die Oberfläche des Belags aufgestrichen ist.

14. Belag nach einem der Ansprüche 1 bis 13, **dadurch gekennzeichnet, daß** der Belag (16, 17) durch eine elastische Farbschicht gebildet ist.

15. Kalanderwalze (4, 6) mit einem elastischen Belag (16, 17) nach einem der Ansprüche 1 bis 14.

16. Anwendung der Kalanderwalze (4, 6) nach Anspruch 15 bei einem Kalander mit zonengesteuerter Biegeeinstellwalze, deren Steuerung in Abhängigkeit vom Farbmuster der Belagoberfläche erfolgt.

## Claims

1. Resilient cover for calender rolls, **characterized in that** it is provided with a coloured material (19; 21) which changes its colour as a function of the temperature.

2. Cover according to Claim 1, **characterized in that** the coloured material (19; 21) changes its colour reversibly.

3. Cover according to Claim 1, **characterized in that** the coloured material (19; 21) changes its colour irreversibly.

4. Cover according to one of Claims 1 to 3, **characterized in that** the coloured material (19; 21) merely indicates a colour change associated with a predefined temperature.

5. Cover according to one of Claims 1 to 3, **characterized in that** the coloured material (19; 21) indicates a plurality of colour changes each associated with a predefined temperature.

6. Cover according to one of Claims 1 to 5, **characterized in that** one colour change takes place at a temperature which lies above the maximum permissible cover temperature.

7. Cover according to one of Claims 1 to 5, **characterized in that** one colour change takes place at a temperature which is equal to the maximum permissible cover temperature or somewhat lower.

8. Cover according to one of Claims 1 to 7, **characterized in that** the coloured material (19; 21) has coloured pigments.

9. Cover according to one of Claims 1 to 7, **characterized in that** the coloured material (19; 21) has coloured crystals.

10. Cover according to one of Claims 1 to 7, **characterized in that** the coloured material (19; 21) has copper, nickel, cobalt, chromium, vanadium, molybdenum or uranium salts.

11. Cover according to one of Claims 1 to 10, **characterized in that** the cover consists substantially of plastic.

12. Cover according to Claim 11, **characterized in that** the coloured material (19) is added to the plastic.

13. Cover according to one of Claims 1 to 11, **characterized in that** the coloured material (21) is spread onto the surface of the cover.

14. Cover according to one of Claims 1 to 13, **characterized in that** the cover (16, 17) is formed by a resilient coloured layer.

15. Calender roll (4, 6) having a resilient cover (16, 17) according to one of Claims 1 to 14.

16. Use of the calender roll (4, 6) according to Claim 15 in a calender with a zone-controlled deflection roll, which is controlled as a function of the coloured pattern of the cover surface.

## Revendications

1. Revêtement élastique pour des rouleaux de calandre, **caractérisé en ce qu'**il est pourvu d'un matériau de couleur (19; 21) qui change de couleur en fonction de la température.

2. Revêtement selon la revendication 1, **caractérisé en ce que** le matériau de couleur (19; 21) change de couleur de manière réversible.

3. Revêtement selon la revendication 1, **caractérisé en ce que** le matériau de couleur (19; 21) change de couleur de manière irréversible.

4. Revêtement selon l'une des revendications 1 à 3, **caractérisé en ce que** le matériau de couleur (19; 21) ne présente qu'un changement de couleur affecté à une température donnée.

5. Revêtement selon l'une des revendications 1 à 3, **caractérisé en ce que** le matériau de couleur (19; 21) présente plusieurs changements de couleur affectés chacun à une température donnée.

6. Revêtement selon l'une des revendications 1 à 5, **caractérisé en ce qu'**un changement de couleur a lieu à une température située au-dessus de la température maximale autorisée pour le revêtement.

7. Revêtement selon l'une des revendications 1 à 5, **caractérisé en ce qu'**un changement de couleur a lieu à une température égale ou un peu inférieure à la température maximale autorisée pour le revêtement.

8. Revêtement selon l'une des revendications 1 à 7, **caractérisé en ce que** le matériau de couleur (19; 21) comporte des pigments colorés.

9. Revêtement selon l'une des revendications 1 à 7, **caractérisé en ce que** le matériau de couleur (19; 21) comporte des cristaux colorés.

10. Revêtement selon l'une des revendications 1 à 7, **caractérisé en ce que** le matériau de couleur (19; 21) comporte des sels de cuivre, de nickel, de cobalt, de chrome, de vanadium, de molybdène ou d'uranium.

11. Revêtement selon l'une des revendications 1 à 10, **caractérisé en ce que** le revêtement se compose pour l'essentiel de matériau synthétique.

12. Revêtement selon la revendication 11, **caractérisé en ce que** le matériau de couleur (19) est mélangé au matériau synthétique.

13. Revêtement selon l'une des revendications 1 à 11, **caractérisé en ce que** le matériau de couleur (21) est étendu sur la surface du revêtement.

14. Revêtement selon l'une des revendications 1 à 13, **caractérisé en ce que** le revêtement (16, 17) est formé par une couche de couleur élastique.

15. Rouleau de calandre (4, 6) pourvu d'un revêtement élastique (16, 17) selon l'une des revendications 1 à 14.

16. Application du rouleau de calandre (4, 6) selon la revendication 15 sur une calandre avec rouleau de réglage de la flexion commandé par zones, dont la commande s'effectue en fonction de l'échantillonnage de la couleur de la surface du revêtement.
